# EUROPÄISCHE PATENTSCHRIFT

(11) **EP 0 787 083 B1**
(45) Veröffentlichungstag und Bekanntmachung des Hinweises auf die Patenterteilung: **07.01.1999**
(21) Anmeldenummer: 95932639.8
(22) Anmeldetag: 10.10.1995
(51) Int. Cl.: B60T 8/36, F16K 31/06

(54) **MAGNETVENTIL MIT DRUCKBEGRENZUNG FÜR SCHLUPFGEREGELTE KRAFTFAHRZEUG-BREMSANLAGEN**
MAGNETIC VALVE WITH PRESSURE LIMITATION FOR CONTROLLED-SLIP MOTOR VEHICLE BRAKING SYSTEMS
ELECTROVANNE A LIMITATION DE PRESSION POUR SYSTEMES DE FREINAGE DE VEHICULES A MOTEUR A ANTIPATINAGE

(30) Priorität: 27.10.1994 DE 4438334
(43) Veröffentlichungstag der Anmeldung: 06.08.1997
(73) Patentinhaber: ROBERT BOSCH GMBH, 70442 Stuttgart (DE)
(72) Erfinder: OEHLER, Martin, D-74211 Leingarten (DE); HOHL, Günther, D-70569 Stuttgart (DE); HUEBNER, Hans-Peter, D-70599 Stuttgart (DE); MITTWOLLEN, Norbert, D-71706 Markgröningen (DE)
(86) Internationale Anmeldenummer: DE9501384
(87) Internationale Veröffentlichungsnummer: WO9613413

(56) Entgegenhaltungen:
- WO-A-92/13741
- WO-A-94/10487
- DE-A- 3 802 648
- DE-A- 4 041 506
- DE-A- 4 234 749
- US-A- 4 919 497

## Beschreibung

### Stand der Technik

Die Erfindung geht aus von einem Magnetventil nach der Gattung des Patentanspruchs.

Es ist schon ein solches Magnetventil bekannt, bei dem das Schließglied aus einer am inneren Teil des Ventilstößels befestigten Kugel besteht (DE 42 34 749 A1). Ein derartiges Ventil wird in schlupfgeregelten Bremsanlagen von Kraftfahrzeugen in einer Bremsleitung zwischen einem Hauptbremszylinder und der Druckseite einer in die Bremsleitung fördernden Hochdruckpumpe angeordnet, wie dies in der Druckschrift DE 40 41 506 A1 beschrieben ist. Bei seine Schließstellung einnehmendem Magnetventil wird das Sitzventil entgegen der Kraft der Druckbegrenzungsfeder dann in seine Teiloffenstellung überführt, wenn der Pumpendruck den Öffnungsdruck des Ventils überschreitet. Das aus dem Ventilsitz austretende Druckmittel umströmt dann das Schließglied nahezu entlang der gesamten Kugeloberfläche. Aufgrund der Spielpassung zwischen dem inneren und dem äußeren Ventilstößelteil können durch Strömungsinstabilitäten an der Kugel hervorgerufene Schwingungen auftreten, welche im Kraftfahrzeug störende Geräusche verursachen.

### Vorteile der Erfindung

Das erfindungsgemäße Magnetventil mit den kennzeichnenden Merkmalen des Patentanspruchs hat demgegenüber den Vorteil, daß durch die Formgebung von Ventilsitz, Schließglied und hülsenförmigem Abschnitt des äußeren Ventilstößelteils sowohl ein definiertes Ablösen der Druckmittelströmung an der das Kugelsegment des Schließgliedes begrenzenden Kante als auch in der Teiloffenstellung eine Zwangsführung der Druckmittelströmung in den Spaltraum zwischen dem Schließglied und dem hülsenförmigen Abschnitt erzielt ist, was die üblicherweise instabile Sitzaustrittsstrahlströmung stabilisert, so daß keine wechselnden Impulskräfte auf das Schließglied wirken und damit dieses nicht zu Schwingungen angeregt wird. Das Magnetventil ist daher bei wirksamer Druckbegrenzung geräuscharm, auch wenn die Hochdruckpumpe pulsierend fördert.

Durch die in den Unteransprüchen aufgeführten Maßnahmen sind vorteilhafte Weiterbildungen und Verbesserungen des im Patentanspruch angegebenen Magnetventils möglich. Die Maßnahmen kennzeichnen einfache geometrische Verhältnisse, welche den Fertigungsaufwand für ein solches Magnetventil niedrig halten.

### Zeichnung

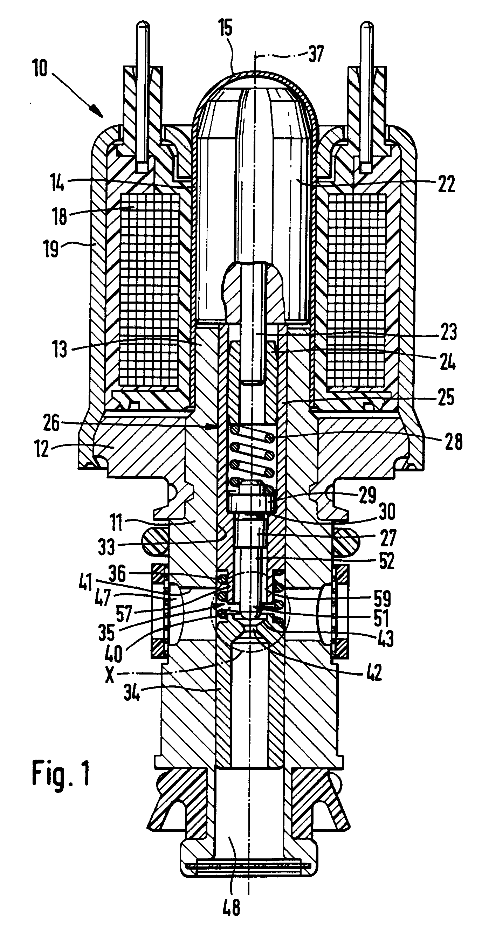

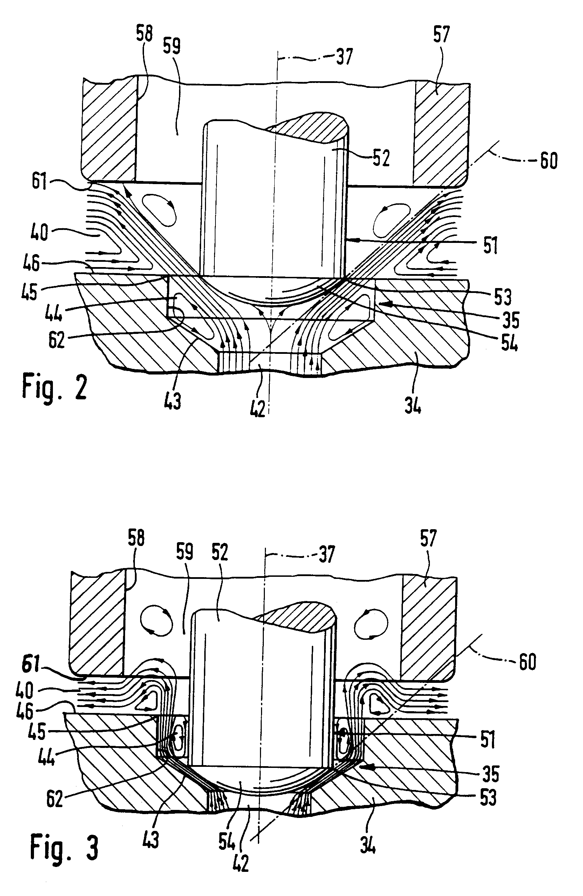

Ein Ausführungsbeispiel der Erfindung ist in der Zeichnung vereinfacht dargestellt und in der nachfolgenden Beschreibung näher erläutert. Es zeigen Figur 1 einen Längsschnitt durch ein Magnetventil, Figuren 2 und 3 Strömungsverläufe im in Figur 1 mit X bezeichneten Sitzventilbereich des seine Offenstellung (Figur 2) und seine teiloffene Stellung (Figur 3) einnehmenden Ventils.

### Beschreibung des Ausführungsbeispiels

Das in Figur 1 dargestellte Magnetventil 10 mit Druckbegrenzung ist zur Verwendung in schlupfgeregelten Bremsanlagen von Kraftfahrzeugen vorgesehen. Das Magnetventil 10 weist ein zur Aufnahme in einem nicht dargestellten Ventilblock bestimmtes Ventilgehäuse 11 auf, welches mit einer Jochscheibe 12 fest verbunden ist. Das Ventilgehäuse 11 ist über die Jochscheibe 12 hinaus mit einem Polkern 13 fortgesetzt. Auf den Polkern 13 ist ein geschlossener, rohrförmiger Ventildom 14 aufgesteckt. Er ist durch Schweißung mit dem Polkern 13 dicht verbunden. Polkernabgewandt ist der Ventildom 14 mit einer halbkugelförmigen Kappe 15 abgeschlossen.

Der Ventildom 14 ist von einer ringförmigen Magnetspule 18 umgriffen. Ein glockenförmiges Gehäuse 19 greift einerseits am Ventildom 14 an, andererseits ist es mit der Jochscheibe 12 verbunden.

Im spulenseitig geschlossenen Ventildom 14 ist ein im wesentlichen kreiszylindrischer Magnetanker 22 längsbewegbar aufgenommen. Mit dem Magnetanker 22 ist ein Führungsstift 23 fest verbunden, welcher im Bereich des Polkerns 13 in eine Einpreßhülse 24 eingreift. Die Einpreßhülse 24, welche längsbewegbar auf dem Führungsstift 23 angeordnet ist, sitzt mit Preßsitz in einem hohl ausgebildeten, äußeren Teil 25 eines Ventilstößels 26. In den äußeren Ventilstößelteil 25 ist ein zweiter, innerer Ventilstößelteil 27 längsbewegbar eingefügt. Im Ventilstößel 26 befindet sich zwischen der Einpreßhülse 24 des äußeren Ventilstößelteils 25 und dem inneren Ventilstößelteil 27 eine Druckbegrenzungsfeder 28 in der Form einer Schraubendruckfeder. Diese greift mit Vorspannung einerseits an der Einpreßhülse 24 und andererseits an einem Bund 29 des inneren Ventilstößelteils 27 an, der wiederum an einem Absatz 30 des äußeren Ventilstößelteils 25 abgestützt ist.

Der Ventilstößel 26 ist in einer durchgehenden Bohrung 33 des Ventilgehäuses 11 längsbewegbar aufgenommen. Polkernabgewandt ist in die Gehäusebohrung 33 ein Ventilkörper 34 eines Sitzventils 35 eingepreßt. Durch eine einerseits am Ventilkörper 34 und andererseits am äußeren Ventilstößelteil 25 angreifende Rückstellfeder 36 ist der Ventilstößel 26 am Magnetanker 22 abgestützt. Der Ventilkörper 34, die Teile 25 und 27 des Ventilstößels 26 und der Magnetanker 22 sind in der Längsachse 37 des Magnetventils 10 angeordnet.

Das Sitzventil 35 befindet sich im Bereich einer Ventilkammer 40, welche die Bohrung 33 mit einer Querbohrung 41 des Ventilgehäuses 11 bildet. Das Sitzventil 35 hat einen im Ventilkörper 34 geformten, eine Ventilöffnung 42 umschließenden Ventilsitz 43 in Hohlkegelform (Figuren 2 und 3). Der Ventilsitz 43 liegt in einer geraden, kreiszylindrischen Eintiefung 44 des Ventilkörpers 34. Die Eintiefung 44 ist gegen die Ventilkammer 40 nach einer scharfen Kante 45 durch eine rechtwinklig zur Ventillängsachse 37 verlaufende Stirnseite 46 des Ventilkörpers 34 begrenzt. Während die Ventilkammer 40 durch die Querbohrung 41 mit einem Druckmitteleinlaß 47 in Verbindung steht, ist die Ventilöffnung 42 durch den durchbohrten Ventilkörper 34 an einen Druckmittelauslaß 48 des Magnetventils 10 angeschlossen. Der Druckmitteleinlaß 47 steht mit einem Hauptbremszylinder, der Druckmittelauslaß 48 mit wenigstens einem Radbremszylinder sowie der Hochdruckseite einer Rückförderpumpe der nicht dargestellten, beispielsweise aus der Druckschrift DE 40 41 506 A1 bekannten hydraulischen Bremsanlage des Kraftfahrzeugs in Verbindung.

Das Sitzventil 35 hat ein mit dem Ventilsitz 43 zusammenwirkendes Schließglied 51, welches von einem im Durchmesser abgesetzten, geraden kreiszylindrischen Abschnitt 52 des inneren Ventilstößelteils 27 gebildet ist. Gegen den Ventilsitz 43 geht der Abschnitt 52 unter Bildung einer scharfen Kante 53 in ein Kugelsegment 54 geringer Höhe über. In der in Figur 2 dargestellten Offenstellung des Sitzventils 35 nimmt das Kugelsegment 54 eine Position etwa im Bereich der Stirnseite 46 des Ventilkörpers 34 ein.

Der Abschnitt 52 des inneren Ventilstößelteils 27 ist von einem hülsenförmigen Abschnitt 57 des äußeren Ventilstößelteils 25 umgriffen. Der hülsenförmige Abschnitt 57 erstreckt sich mit radialem Abstand zum kreiszylindrischen Abschnitt 52, d. h. die innere Mantelfläche 58 des hülsenförmigen Abschnitts weist einen gleichmäßigen Abstand zum kreiszylindrischen Abschnitt auf. Hierdurch ist zwischen dem hülsenförmigen Abschnitt 57 und dem kreiszylindrischen Abschnitt 52 ein Spaltraum 59 gebildet, welcher gegen die Ventilkammer 40 offen, ventilsitzabgewandt jedoch am Ende des kreiszylindrischen Abschnitts 52 des inneren Ventilstößelteils 27 abgeschlossen ist. Außerdem weist der hülsenförmige Abschnitt 57 einen axialen Rückstand gegenüber dem Kugelsegment 54 auf. Dieser ist derart bemessen, daß eine im Randbereich des Kugelsegments 54 angelegte, die Längsachse 37 des Ventils 10 unter einem Winkel von ca. 45° schneidende Tangente 60 auf die rechtwinklig zur Ventillängsachse 37 verlaufende Stirnseite 61 des hülsenförmigen Abschnitts 57 trifft, wie dies in Figur 2 dargestellt ist. Abweichend hiervon kann der axiale Rückstand oder der Außendurchmesser des hülsenförmigen Abschnitts 57 derart bemessen sein, daß die Tangente 60 außerhalb des Abschnitts an der Stirnseite 61 vorbeiläuft. Wie Figur 2 außerdem erkennen läßt, läuft in der Offenstellung des Sitzventils 35 die Tangente 60 an der stirnseitigen Kante 45 der Eintiefung 44 im Ventilkörper 34 vorbei. Die Eintiefung 44 hat einen Durchmesser, der gleich oder kleiner als der Innendurchmesser des hülsenförmigen Abschnitts 57 ist,beim dargestellten Ausführungsbeispiel etwa mittig zwischen diesem und dem Abschnitt 52 des inneren Ventilstößelteils 27 liegt. In der in Figur 3 dargestellten Teiloffenstellung des Sitzventils 35 trifft die Tangente 60 dagegen auf die Mantelwand 62 der Eintiefung 44. In der Teiloffenstellung nimmt der hülsenförmige Abschnitt 57 einen erheblich geringeren axialen Abstand zur Stirnseite 46 des Ventilkörpers 34 ein als in der Offenstellung.

Das Magnetventil 10 hat folgende Wirkungsweise:

Bei einer Bremsung ohne Schlupfregelung wird das seine Offenstellung einnehmende Sitzventil 35 vom Druckmitteleinlaß 47 zum Druckmittelauslaß 48 bei Druckaufbau in den Radbremszylindern, bei Druckabbau in umgekehrter Richtung, vom Druckmittel durchströmt.

Bei Bremsdruckabbau nimmt das Druckmittel einen Weg durch das Sitzventil 35 in die Ventilkammer 40, wie dies in Figur 2 durch Stromlinien angedeutet ist. Das von der Ventilöffnung 42 her den Ventilsitz 43 durchströmende Druckmittel wird vom Kugelsegment 54 des Schließglieds 51 etwa tangential umgelenkt, wobei die Strömung an der scharfen Kante 53 des Schließgliedes 51 abreißt. Das Druckmittel verläßt die Eintiefung 45 in Richtung der Tangente 60 und trifft teilweise auf die Stirnseite 61 des hülsenförmigen Abschnitts 57 des äußeren Ventilstößelteils 25. Dort erfährt das Druckmittel eine radiale Ablenkung in die Ventilkammer 40, aus der es zum Druckmitteleinlaß 47 abströmt.

Bei einer der Antriebsschlupfregelung dienenden Bremsung wird durch Bestromen der Magnetspule 18 ein Magnetfeld erzeugt, welches eine Kraft auf den Magnetanker 22 ausübt und diesen in Richtung auf den Ventilkörper 34 verschiebt. Der am Magnetanker 22 abgestützte äußere Ventilstößelteil 25 wird entgegen der Kraft der Rückstellfeder 36 mitbewegt, ebenso der durch die Vorspannkraft der Druckbegrenzungsfeder 28 axial am äußeren Ventilstößelteil abgestützte innere Ventilstößelteil 27. Im Verlauf der Bewegung des Magnetankers 22 trifft das Schließglied 51 auf den Ventilsitz 43 des Ventilkörpers 34. Hierdurch wird die Bewegung des inneren Ventilstößelteils 27 beendet. Das Sitzventil 35 nimmt seine Schließstellung ein. Da der Magnetanker 22 noch nicht seinen vollen Hüb ausgeführt hat (die Hübe des Sitzventils 35 und des Magnetankers 22 sind in Figur 1 der Zeichnung unmaßstäblich wiedergegeben) und sich daher weiter gegen den Ventilkörper 34 bewegt, wird der Bund 29 des inneren Ventilstößelteils 27 unter Überwindung der Vorspannkraft der Druckbegrenzungsfeder 28 von dem Absatz 30 des äußeren Ventilstößelteils 25 abgehoben. Während bisher der Kraftfluß der Druckbegrenzungsfeder 28 über den Bund des inneren Ventilstößelteils 27, den äußeren Ventilstößelteil 25 sowie die Einpreßhülse 24 geschlossen war, übt am Ende des Ankerhubes die Druckbegrenzungsfeder 28 eine Axialkraft auf den inneren Ventilstößelteil 27 und dieser auf den Ventilsitz 43 des Ventilkörpers 34 aus. Diese auf das Schließglied 51 übertragene Kraft ist niedriger als die Magnetkraft des Magnetankers 22. Die Kraft der Druckbegrenzungsfeder 28 wirkt als den Öffnungsdruck des Magnetventils 10 bestimmende Schließkraft des Sitzventils 35.

Bei am Ventilsitz 43 angreifendem Schließglied 51 übt das Magnetventil 10 somit die Funktion eines Absperrventils mit druckbegrenzender Wirkung seitens des radbremszylinderseitigen Teils der Bremsanlage aus. Wird von der Rückförderpumpe der Öffnungsdruck des Magnetventils 10 überschritten, so wird die Druckbegrenzungsfunktion wirksam, und das Schließglied 51 hebt entgegen der Kraft der Druckbegrenzungsfeder 28 vom Ventilsitz 43 ab und nimmt die in Figur 3 dargestellte Teiloffenstellung des Sitzventils 35 ein.

In dieser Stellung nehmen die Stromlinien beim Durchdringen des engen Spaltes zwischen dem Ventilsitz 43 und dem Kugelsegment 54 einen Verlauf entsprechend der Tangente 60 und treffen beim Verlassen des Ventilsitzes auf die Mantelwand 62 der Eintiefung 44. Hier erfahren die Stromlinien eine axiale Ablenkung, so daß sie z. T. beim Verlassen der Eintiefung 44 bis in den Spaltraum 59 zwischen dem Schließglied 51 und dem hülsenförmigen Abschnitt 57 eindringen und dort einen Staudruck erzeugen, der umfangsseitig auf den kreiszylindrischen Abschnitt 52 des Schließgliedes 51 wirkt. Diese definierte Strömungsführung unterdrückt mögliche Instabilitäten der vorliegenden Strahlströmung, so daß das Schließglied 51 nicht mit wechselnden Impulskräften beaufschlagt und daher nicht zu Schwingungen angeregt wird. Durch den Staudruck wird die Druckmittelströmung aus dem Spaltraum 59 heraus gelenkt, so daß das Druckmittel einen radialen Weg zwischen den beiden Stirnseiten 46 und 61 von Ventilkörper 34 und hülsenförmigem Abschnitt 57 in Richtung auf den Druckmitteleinlaß 47 nimmt.

Beim Beenden der Bestromung der Magnetspule 18 bricht das Magnetfeld zusammen, und der Magnetanker 22 wird durch die Wirkung der Druckbegrenzungsfeder 28 sowie der Rückstellfeder 36 zusammen mit dem Ventilstößel 26 in die in Figur 1 dargestellte Ausgangsstellung bewegt, in welcher das Sitzventil 35 seine Offenstellung einnimmt.

## Patentansprüche

1. Magnetventil (10) mit Druckbegrenzung für schlupfgeregelte Kraftfahrzeug-Bremsanlagen, mit den folgenden Merkmalen:
- es ist ein Sitzventil (35) mit einem eine Ventilöffnung (42) umschließenden Ventilsitz (43) in einem Ventilkörper (34) und einem mit diesem zusammenwirkenden Schließglied (51) vorgesehen,
- das Sitzventil (35) weist Kegel-Kugel-Konfiguration auf, wobei der Ventilsitz (43) kegelförmig und das Schließglied (51) stirnseitig kugelförmig ausgebildet sind,
- das Schließglied (51) ist am inneren Teil (27) eines aus zwei koaxial ineinandergreifenden Teilen (25, 27) gebildeten Ventilstößels (26) angeordnet,
- der Ventilstößel (26) ist durch Magnetkraft in die Schließstellung und durch die Kraft einer Rückstellfeder (36) in die Offenstellung des Sitzventils (35) axial bewegbar,
- zwischen dem inneren Teil (27) und dem äußeren Teil (25) des Ventilstößels (26) ist eine sich axial an diesen abstützende Druckbegrenzungsfeder (28) angeordnet, gegen deren Kraft der innere Ventilstößelteil (27) aus der Schließstellung in eine Teiloffenstellung des Sitzventils (35) relativ zum äußeren Ventilstößelteil (25) axial verschiebbar ist,
gekennzeichnet durch die weiteren Merkmale:
- der Ventilsitz (43) liegt in einer wenigstens annähernd geraden, kreisförmigen Eintiefung (44) des Ventilkörpers (34), die stößelseitig scharfkantig durch eine wenigstens annähernd radial verlaufende Stirnseite (46) des Ventilkörpers begrenzt ist,
- das Schließglied (51) geht nach einem stirnseitigen Kugelsegment (54) unter Bildung einer scharfen Kante (53) in einen geraden kreiszylindrischen Abschnitt (52) des inneren Ventilstößelteils (27) über,
- der Abschnitt (52) des inneren Ventilstößelteils (27) ist von einem hülsenförmigen Abschnitt (57) des äußeren Ventilstößelteils (25) unter Bildung eines ventilsitzabgewandt geschlossenen Spaltraumes (59) mit radialem Abstand sowie mit axialem Rückstand gegenüber dem Kugelsegment (54) umgriffen,
- der axiale Rückstand des hülsenförmigen Abschnitts (57) ist derart bemessen, daß eine im Randbereich des Kugelsegments (54) angelegte, die Längsachse (37) des Ventils (10) schneidende Tangente (60) auf die Stirnseite (61) des hülsenförmigen Abschnitts (57) trifft oder außerhalb dieses Abschnitts an der Stirnseite vorbeiläuft,
- in der Offenstellung des Sitzventils (35) liegt das Kugelsegment (54) des Schließgliedes (51) wenigstens annähernd im Bereich der Ventilkörperstirnseite (46), so daß die Tangente (60) an der stirnseitigen Kante (45) der Eintiefung (44) des Ventilkörpers (34) vorbeiläuft,
- in der Teiloffenstellung des Sitzventils (35), in der das Schließglied (51) entgegen der Kraft der Druckbegrenzungsfeder (28) vom Ventilsitz (43) abgehoben ist, trifft die Tangente (60) auf die Mantelwand (62) der Eintiefung (44).

2. Magnetventil nach Anspruch 1, dadurch gekennzeichnet, daß die Tangente (60) einen Winkel zwischen 30° und 60°, vorzugsweise 45°, zur Ventillängsachse (37) einschließt.

3. Magnetventil nach Anspruch 1, dadurch gekennzeichnet, daß die Eintiefung (44) des Ventilkörpers (34) einen Durchmesser hat, der gleich oder kleiner ist als der Innendurchmesser des hülsenförmigen Abschnitts (57) des äußeren Ventilstößelteils (25).

4. Magnetventil nach Anspruch 3, dadurch gekennzeichnet, daß der Durchmesser der Eintiefung (44) wenigstens annähernd mittig zwischen dem Durchmesser des Abschnitts (52) des inneren Ventilstößelteils (27) und dem Innendurchmesser des hülsenförmigen Abschnitts (57) des äußeren Ventilstößelteils (25) liegt.

5. Magnetventil nach Anspruch 1, dadurch gekennzeichnet, daß die Eintiefung (44) des Ventilkörpers (34), der Abschnitt (52) des inneren Ventilstößelteils (27) und die innere Mantelfläche (58) des hülsenförmigen Abschnitts (57) des äußeren Ventilstößelteils (25) achsparallel begrenzt sind, während die Stirnseiten (46, 61) des Ventilkörpers (34) und des hülsenförmigen Abschnitts (57) in rechtwinklig zur Ventillängsachse (37) verlaufenden Ebenen liegen.

## Claims

1. Solenoid valve (10) with pressure limitation for controlled-slip motor vehicle braking systems, having the following features:
- a seat valve (35) with a valve seat (43) enclosing a valve orifice (42) and located in a valve body (34) and with a closing member (51) cooperating with the latter is provided,
- the seat valve (35) has a cone/sphere configuration, the valve seat (43) being designed conically and the closing member (51) being designed spherically on its end face,
- the closing member (51) is arranged on the inner part (27) of a valve tappet (26) formed from two parts (25, 27) engaging coaxially one in the other,
- the valve tappet (26) can be moved axially into the closing position of the seat valve (35) by means of magnetic force and into the open position of the said seat valve by means of the force of a return spring (36),
- arranged between the inner part (27) and the outer part (25) of the valve tappet (26) is a pressure-limiting spring (28) which is supported axially on the said parts and counter to the force of which the inner valve-tappet part (27) can be displaced axially relative to the outer valve-tappet part (25) out of the closing position of the seat valve into the partly-open position of the latter,
characterized by the further features:
- the valve seat (43) is located in an at least approximately straight circular depression (44) of the valve body (34), the said depression being delimited on the tappet side, in a sharp-edged manner, by an end face (46) of the valve body, the said end face running at least approximately radially,
- the closing member (51), after a spherical segment (54) located on its end face, merges into a straight circular-cylindrical portion (52) of the inner valve-tappet part (27) to form a sharp edge (53),
- the portion (52) of the inner valve-tappet part (27) is surrounded, at a radial distance and with an axial setback relative to the spherical segment (54), by a sleeve-shaped portion (57) of the outer valve-tappet part (25), to form a gap space (59) closed on the side facing away from the valve seat,
- the axial setback of the sleeve-shaped portion (57) is dimensioned in such a way that a tangent (60), drawn in the edge region of the spherical segment (54) and intersecting the longitudinal axis (37) of the valve (10), meets the end face (61) of the sleeve-shaped portion (57) or runs past the end face outside this portion,
- in the open position of the seat valve (35), the spherical segment (54) of the closing member (51) is located at least approximately in the region of the valve-body end face (46), so that the tangent (60) runs past the end-face edge (45) of the depression (44) of the valve body (34),
- in the partly-open position of the seat valve (35), in which the closing member (51) is lifted off from the valve seat (43) counter to the force of the pressure-limiting spring (28), the tangent (60) meets the cylindrical wall (62) of the depression (44).

2. Solenoid valve according to Claim 1, characterized in that the tangent (60) forms an angle of between 30° and 60°, preferably 45°, to the valve longitudinal axis (37).

3. Solenoid valve according to Claim 1, characterized in that the depression (44) of the valve body (34) has a diameter which is equal to or smaller than the inside diameter of the sleeve-shaped portion (57) of the outer valve-tappet part (25).

4. Solenoid valve according to Claim 3, characterized in that the diameter of the depression (44) is located at least approximately centrally between the diameter of the portion (52) of the inner valve-tappet part (27) and the inside diameter of the sleeve-shaped portion (57) of the outer valve-tappet part (25).

5. Solenoid valve according to Claim 1, characterized in that the depression (44) of the valve body (34), the portion (52) of the inner valve-tappet part (27) and the inner cylindrical surface (58) of the sleeve-shaped portion (57) of the outer valve-tappet part (25) are delimited in an axis-parallel manner, whilst the end faces (46, 61) of the valve body (34) and of the sleeve-shaped portion (57) lie in planes running at right angles to the valve longitudinal axis (37).

## Revendications

1. Electrovanne (10) à limitation de pression pour systèmes de freinage de véhicules à moteur à antipatinage, avec les particularités suivantes :
• il est prévu une vanne à siège (35) avec un siège de vanne (43), qui entoure un orifice de vanne (42), dans un corps de vanne (34) et avec un organe d'obturation (51), qui coopère avec ce corps de vanne,
• la vanne à siège (35) présente une configuration conique sphérique, le siège de la vanne (43) étant constitué en forme de cône et l'organe d'obturation (51) étant constitué en forme de sphère du côté frontal,
• l'organe d'obturation (51) est disposé sur la partie intérieure (27) d'un coulisseau (26) se composant de deux parties (25, 27) venant en prise l'une dans l'autre de façon coaxiale,
• le coulisseau (26) peut être déplacé axialement pour venir en position de fermeture sous l'action de la force magnétique et dans la position ouverte de la vanne à siège (35) sous l'action de la force d'un ressort de rappel (36),
• entre la partie intérieure (27) et la partie extérieure (25) du coulisseau (26) on dispose un ressort de limitation de pression (28), qui prend appui axialement sur celle-ci, ressort contre la force duquel on peut faire coulisser axialement la partie intérieure (27) du coulisseau de sa position d'obturation dans une position en partie ouverte de la vanne à siège (35) par rapport à la partie extérieure (25) du coulisseau,
caractérisée par les autres particularités suivantes :
• la vanne à siège (43) se trouve dans un renfoncement (44), de forme circulaire, rectiligne au moins approximativement, du corps de la vanne (34), renfoncement qui est limité du côté du coulisseau avec des arêtes vives par une face frontale (46) du corps de la vanne qui s'étend radialement au moins approximativement,
• l'organe d'obturation (51) se transforme après un segment sphérique (54), situé du côté frontal, en formant une arête vive (53), en une section cylindrique rectiligne, à base circulaire, (52) de la partie intérieure du coulisseau (27),
• la section (52) de la partie intérieure du coulisseau (27) est entourée par une section en forme de manchon (57) de la partie extérieure du coulisseau en formant une fente (59) fermée à l'opposé du siège de la vanne avec une certaine distance radiale ainsi qu'avec un recul axial par rapport au segment sphérique (54),
• le recul axial de la section (57) en forme de manchon a une dimension telle qu'une tangente (60) appliquée dans la zone de bordure du segment sphérique (54), coupant l'axe longitudinal (37) de la vanne (10) tombe sur la face frontale (61) de la section (57) en forme de manchon ou passe, en dehors de cette section, devant la face frontale,
• quand la vanne à siège (35) est en position ouverte, le segment sphérique (54) de l'organe d'obturation se trouve au moins à peu près dans la zone de la face frontale (46) du corps de la vanne, de telle sorte que la tangente (60) passe devant l'arête (45), située du côté frontal, du renfoncement (44) du corps de la vanne (34),
• quand la vanne à siège (35) est en position en partie ouverte, dans laquelle l'organe d'obturation (51) est soulevé du siège de la vanne (43) à l'encontre de la force du ressort de limitation de la pression (28), la tangente (60) tombe sur la paroi (62) de l'enveloppe du renfoncement (44).

2. Electrovanne selon la revendication 1,
caractérisée en ce que
la tangente (60) forme un angle compris entre 30° et 60°, de préférence de 45°, par rapport à l'axe longitudinal de la vanne (37).

3. Electrovanne selon la revendication 1,
caractérisée en ce que
le renfoncement (44) du corps de la vanne (34) a un diamètre, qui est égal ou inférieur au diamètre intérieur de la section en forme de manchon (57) de la partie extérieure du coulisseau (25).

4. Electrovanne selon la revendication 3,
caractérisée en ce que
le diamètre du renfoncement (44) se trouve au moins à peu près au milieu entre le diamètre de la section (52) de la partie intérieure du coulisseau (27) et le diamètre intérieur de la section (57) en forme de manchon de la partie extérieure du coulisseau (25)

5. Electrovanne selon la revendication 1,
caractérisée en ce que
le renfoncement (44) du corps de la vanne (34), la section (52) de la partie intérieure (27) du coulisseau de la vanne et la surface intérieure (58) de l'enveloppe de la section (57), en forme de manchon, de la partie extérieure (25) du coulisseau de la vanne sont limités parallèlement à l'axe, tandis que les faces frontales (46, 61) du corps de la vanne (34) et de la section (57), en forme de manchon, se trouvent dans des plans qui s'étendent à angle droit par rapport à l'axe longitudinal (37) de la vanne.
